# EUROPEAN PATENT SPECIFICATION

(11) **EP 2 852 553 B1**
(45) Date of publication and mention of the grant of the patent: **09.08.2017**
(21) Application number: 13729121.7
(22) Date of filing: 14.05.2013
(51) Int. Cl.: B01J 7/00, C01B 3/04

(54) **HYDROGEN GENERATOR WITH SEQUENTIAL FUEL INITIATION**
WASSERSTOFFGENERATOR MIT SEQUENTIELLER BRENNSTOFFINITIIERUNG
GÉNÉRATEUR D'HYDROGÈNE À ADMISSION DE COMBUSTIBLE SÉQUENTIELLE

(30) Priority: 15.05.2012 US 201261646926 P
(43) Date of publication of application: 01.04.2015
(73) Proprietor: Intelligent Energy, Inc., San Jose, CA 95110 (US)
(72) Inventor: HUDDLESTON, Craig, Lakewood, Ohio 44107 (US); BARTON, Russell, New Westminster, British Columbia V3L 3L3 (CA)
(74) Representative: Creation IP Ltd
(86) International application number: PCT/US2013/040883
(87) International publication number: WO 2013/173287

(56) References cited:
- EP-A1- 1 170 249
- US-A- 4 477 415
- US-A1- 2004 023 087
- US-A1- 2010 080 735

## Description

### TECHNICAL FIELD

This invention relates to a hydrogen generator for providing hydrogen and a method of generating hydrogen gas with the hydrogen generator.

### BACKGROUND

Interest in fuel cell batteries as power sources for portable electronic devices has grown. A fuel cell is an electrochemical cell that uses materials from outside the cell as the active materials to react at the positive and negative electrodes. Because a fuel cell does not have to contain all of the active materials used to generate electricity, the fuel cell can be made with a small volume relative to the amount of electrical energy produced compared to other types of batteries.

Fuel cells can be categorized according to the type of electrolyte used, typically one of five types: proton exchange membrane fuel cell (PEMFC), alkaline fuel cell (AFC), phosphoric-acid fuel cell (PAFC), solid oxide fuel cell (SOFC) and molten carbonate fuel cell (MCFC). Each of these types of fuel cell can use hydrogen and oxygen as the active materials of the fuel cell negative electrode (anode) and positive electrode (cathode), respectively. Hydrogen is oxidized at the negative electrode, and oxygen is reduced at the positive electrode. Ions pass through an electrically nonconductive, ion permeable separator and electrons pass through an external circuit to provide an electric current.

In some types of hydrogen fuel cells, hydrogen is formed from a hydrogencontaining fuel supplied to the negative electrode side of the fuel cell. In other types of hydrogen fuel cells, hydrogen gas is supplied to the fuel cell from a source outside the fuel cell.

A fuel cell system can include a fuel cell battery, including one or more fuel cells (e.g., a fuel cell stack), and a fuel source, such as a fuel tank or a hydrogen generator. Hydrogen generators that supply hydrogen gas to a fuel cell can be an integral part of a fuel cell system, or they can be removably coupled to the fuel cell system. Removable hydrogen generators can be disposable (intended for only a one-time use) or reusable. Both removable and permanently installed hydrogen generators can be refillable (intended for use multiple times) to replace consumed reactant materials.

Hydrogen generators can produce hydrogen using a variety of reactants and a variety of methods for initiating the hydrogen generating reactants. Hydrogen gas can be evolved when a hydrogen containing material reacts. Some hydrogen generators use a hydrogen containing compound that can be heated to evolve hydrogen in a thermochemical decomposition reaction.

In selecting reactants for use in a hydrogen generator, consideration may be given to the following: (a) stability during long periods of time when the hydrogen generator is not in use, (b) ease of initiation of a hydrogen generating reaction, (c) the amount of energy that must be provided to sustain the hydrogen generating reaction, (d) the maximum operating temperature of the hydrogen generating reaction, and (e) the total volume of hydrogen that can be produced per unit of volume and per unit of mass of the reactant(s).

By limiting the amount of reactant that will react in response to a single reaction initiation event, the need for containing hydrogen gas at high pressures can be avoided, thereby simplifying the design and making a greater variety of suitable materials available. If the reactant is not exothermic such that the reaction is self-sustaining after initiation, energy to the initiator can be turned on and off in response to the need for hydrogen gas. This method of control is not suitable with exothermic reactants, and even with endothermic reactants, multiple initiators may be needed for efficient utilization of the reactant. Reactant can be segregated into small quantities, with the reaction of each quantity initiated by a separate initiator. A controller can be used to selectively provide electric energy to initiators associated with the segregated quantities of reactant. This can require a more complicated control system. Having more than one separate electrical line between the energy source and the initiators can complicate the hydrogen generator design, and if the electrical lines must pass through a sealed container, achieving a highly reliable seal to contain hydrogen gas within the hydrogen generator can be more difficult. US 2004/023087 A1 discloses a hydrogen storage, distribution and recovery system and method for producing large volumes of hydrogen upon demand.

An object of the present invention is to provide a hydrogen generator that can produce a large total volume of hydrogen gas relative to the mass and volume of the hydrogen generator, can produce hydrogen on an as needed basis, can be reliably sealed to contain hydrogen gas, can be easily and economically manufactured.

### SUMMARY

A first aspect of the invention is a hydrogen generator including a reactant composition including a reactant that thermally decomposes to produce hydrogen gas when heated to at least a minimum temperature, and an electric circuit in electrical communication with an energy source. The electric circuit includes a plurality of parallel branches in a sequence, the sequence including in order a first branch and at least one next branch, the final at least one next branch being a last branch; a heating element in each of the parallel branches; a normally open switch between each pair of parallel branches in the sequence, the normally open switch having an open state and a closed state; and a normally closed switch in each parallel branch except the last branch, the normally closed switch having a closed state and an open state. Current flowing through the circuit initially flows through only the first branch. The heating element in the first branch is disposed to heat a first portion of the reactant composition, a first normally open switch and a first normally closed switch. When the first normally open switch is in the closed state, a current flow through the circuit does not include a current flow through the adjacent next branch, in which a next heating element is disposed to heat a next portion of the reactant composition. When the first normally closed switch is in the open state, a current flow through the circuit does not include a flow through the first branch. Each of the normally open switches comprises a switch material with a resistivity that permanently decreases in response to heating to a first temperature such that the normally open switch is in the closed state upon heating to at least the first temperature, and each of the normally closed switches is in the open state upon heating to at least a second temperature. Embodiments can include one or more of the following features:
- the sequence of adjacent heating elements includes the first heating element, followed by a first next branch, followed by a second next branch; a next normally open switch is disposed between the first next branch and the second next branch; a next normally closed switch is disposed in the first next branch; the heating element in the first next branch is disposed to heat the next normally open switch, the next normally closed switch and a first next portion of the reactant composition; the second next heating element is disposed to heat a second next portion of the reactant composition; when the next normally open switch is in the closed state, a current flow through the circuit does not include a current flow through the second next branch; and when the next normally closed switch is in the open state, a current flow through the circuit does not include a current flow through the first next branch; the second next branch can be the last branch, or one or more additional next branches can be disposed between the second next branch and the last next branch;
- the heating element in each branch except the last branch is disposed to heat the normally closed witch in that branch and the normally open switch between that branch and the next branch in the sequence, such that the heating elements can be energized and deenergized in the sequence, beginning with the heating element in the first branch and ending with the heating element in the last branch;
- the reactant composition is segregated into individual fuel pellets, each of which is in thermal communication with a heating element; each fuel pellet can be in thermal communication with a single heating element or with more than one heating element; each heating element can be in thermal communication with a single pellet or with more than one of the pellets;
- the reactant composition includes a material that can increase in electrical conductivity when heated; a portion of the reactant composition is the switch material in the normally open switches; the reactant can increase in electrical conductivity when heated; the reactant can include aluminum hydride;
- the heating elements are resistive heating elements;
- the heating elements and switches are contained within the fuel unit;
- the heating elements and switches are contained outside the fuel unit;
- the circuit includes a single pair of first and second electrical leads configured to carry current provided by the energy source;
- the normally open switches include no moving parts;
- the switch material of each normally open switch is initially an electrically nonconductive material that can become permanently electrically conductive upon heating to at least the first temperature;
- the normally closed switches have no moving parts;
- the switch material of each normally closed switch is an initially electrically conductive material that becomes permanently electrically nonconductive upon heating to at least the second temperature;
- the normally closed switches include a switch material that can melt or thermally decompose when heated; the switch material can include a metal or metal alloy;
- the first temperature and the second temperature are different;
- the first temperature and the second temperature are equal;
- the heating element in each of the parallel branches has a heating element resistance, and each normally open switch: is disposed between a preceding branch and a following branch in the sequence; when in an open state has a resistance of at least 20 times a resistance of the heating element in the preceding branch; and when in a closed state has a resistance less than 0.2 times the resistance of the heating element in the preceding branch; when the normally open switch is in the open state it has a resistance that is preferably at least 100 times and more preferably at least 100 times the resistance of the heating element in the preceding branch; when the normally open switch is in the closed state it has a resistance that is preferably less than 0.1 times and more preferably less than 0.01 times the resistance of the heating element in the preceding branch;
- the normally closed switch in each branch is in the open state before the normally open switch between that branch and the next branch is in the closed state
- the reactant is contained in a fuel unit disposed in the hydrogen generator; the fuel unit cam be a user-replaceable fuel unit; the plurality of electric heating elements and the electric circuit can be disposed in the fuel unit;
- the hydrogen generator is configured to simultaneously contain a plurality of fuel units; and
- the hydrogen generator is portable.

In a second aspect of the invention, there is provided a fuel cell system including a fuel cell battery and a hydrogen generator according to any of the embodiments of the first aspect of the invention. The fuel cell system can be portable.

In a third aspect of the invention, there is provided a method of generating hydrogen gas with a hydrogen generator comprising a reactant composition including a reactant that thermally decomposes to produce hydrogen gas when heated to at least a minimum temperature; and an electric circuit in electrical communication with an energy source, the electric circuit including: a plurality of parallel branches in a sequence, the sequence comprising in order a first branch and at least one next branch, the final at least one next branch being a last branch; a heating element in each of the parallel branches; a normally open switch between each pair of parallel branches in the sequence, the normally open switch having an open state and a closed state; and a normally closed switch in each parallel branch except the last branch, the normally open switch having a closed state and an open state. The method includes the steps:
(a) passing an electric current through the circuit, including only the first branch to energize a first heating element therein;
(b) heating a first portion of the reactant composition to at least the minimum temperature to release hydrogen gas therefrom;
(c) heating the first normally open switch and the first normally closed switch with the first heating element to open the first normally closed switch and close the first normally open switch after a majority of the reactant in the first portion has reacted to release hydrogen gas;
(d) continuing to pass an electric current through the circuit, including a first of the at least one next branches to energize a second heating element therein; and
(e) heating a second portion of the reactant composition to at least the minimum temperature to release hydrogen gas therefrom.

Embodiments can include one or more of the following features:
- the hydrogen generator includes more than one next branch, the second heating element further heats a second normally open switch and a second normally closed switch to open the second normally closed switch and close the second normally open switch, and an electric current continues to pass through the circuit, including a second next branch to energize a third heating element therein;
- the hydrogen generator includes more than one next branch, the heating element in each next branch heats a corresponding portion of the reactant composition to release hydrogen gas, the heating element in each next branch except the last branch heats a corresponding normally closed switch and a normally open switch to open the corresponding normally closed switch and close the corresponding normally open switch after a majority of the reactant in the corresponding portion has reacted to release hydrogen gas;
- the hydrogen generator includes one or more additional features of the first aspect of the invention.

### BRIEF DESCRIPTION OF THE DRAWINGS

In the drawings:
FIG. 1 is a schematic drawing of an embodiment of a hydrogen generator fuel unit with an electrical circuit for providing current to a plurality of heating elements in a sequence;
FIG. 2A is a partially cut away perspective drawing of a second embodiment of a hydrogen generator fuel unit;
FIG. 2B is an enlargement of a portion of FIG. 2A; and
FIG. 3 is a partially exploded, partially cut away perspective view of a third embodiment of a hydrogen generator fuel unit.

### DETAILED DESCRIPTION

The present invention is directed to a hydrogen generator with a fuel unit containing a reactant that reacts to produce hydrogen that can be used by a hydrogen consuming apparatus such as a fuel cell battery. The hydrogen generator and the fuel cell battery can be part of a fuel cell system that produces electricity for an electronic device. Preferably the hydrogen generator is portable, either alone or as part of the fuel cell system or the device. As used herein, portable means readily moved by an individual person, without requiring the use of lifting or transporting equipment *(e.g.,* a hoist, dolly, lift truck or the like).

The hydrogen generator uses one or more reactants that can react to produce hydrogen gas. In order to economically produce a large volume of hydrogen gas per unit of volume and weight, it is advantageous to use a reactant that can undergo a thermal decomposition reaction that produces hydrogen gas when heated. Such thermal decomposition reactions can produce a larger volume of gas of reactant than, for example, the same amount (per mole, per unit of weight or per unit of volume) of reactants that undergo a hydrolysis reaction.

It can be advantageous to produce hydrogen only as needed by the hydrogen consuming apparatus. This can limit or avoid accumulation hydrogen gas prior to use. Accumulating of hydrogen gas, particularly under pressure, increases susceptibility to leaks and can add to the complexity and cost of the hydrogen generator. To start and stop the hydrogen generating reaction, heating can be started and stopped, such as by turning on and off power to heating elements. By sequentially heating limited quantities of the total amount of reactant, hydrogen generation can be stopped more rapidly, limiting the amount of hydrogen gas that may have to be accumulated, and response times may be reduced during intermittent use. By using separate heating elements to heat limited quantities of reactant, both the distance that heat must be conducted and the amount of reaction byproducts through which the heat must be conducted to reach all of the reactant can be limited, resulting in improved heating efficiency.

These advantages are accomplished through the use of a plurality of electric heating elements, each configured to heat a portion of the reactant, and an electric circuit that includes a pair of first and second leads and the heating elements between the first and second leads. Preferably the circuit has only a single pair of leads electrically connected to an energy source; this can simplify sealing of the hydrogen generator if the energy source is outside the sealed portion of the hydrogen generator. The circuit includes a plurality of parallel branches (B), arranged in a sequence *(e.g.,* B₁, B₂, ..., Bₙ) between the first and second leads. As used herein, the term "sequence" is the sequence in which the branches are disposed between the first and second leads. As used herein, "adjacent branches" are branches that are next to each other in the sequence *(e.g.,* B₁ and B₂ are adjacent branches, B₂ and B₃ are adjacent branches, and so on). Circuit components *(e.g.,* heating elements and switches) are referred to below as being adjacent components if they are contained in or following adjacent branches, and multiple components of a give type are considered to be in the same sequence as the corresponding branches in which they are disposed. At least one heating element (H) is contained in each of the branches. In the description below, reference is made to a single heating element in each branch, but it will be appreciated that more than one heating element can be contained in each branch. The heating element H in a given branch B can be referred to below using the same subscript as that branch *(e.g.,* heating element H₁ is in branch B₁, heating element H₂ is in branch B₂, and so on). For a sequence of branches *(e.g.,* B₁, B₂, B₃), the heating elements contained therein (H₁, H₂, H₃) are considered herein to be disposed in the same sequence as their corresponding branches.

A normally open switch (NO₁, NO₂, etc.) is disposed in the circuit between adjacent branches in the sequence, and a normally closed switch (NC₁, NC₂, etc.) is disposed in each of the branches B except the last branch. As used herein, the term "normally open switch" means a switch that is initially open, the term "normally closed switch" means a switch that is initially closed, and the term "initially" refers to the instant at which electricity begins to flow in any of the parallel branches of the electric circuit. Initially when an electric current flows through the circuit, the current flows through only the first branch B₁ to energize only heating element H₁ because normally open switch NO₁ between branch B₁ and adjacent branch B₂ is open. As heating element H₁ in branch B₁ heats the first portion of the reactant composition, it also heats switches NO₁ and NC₁. Each normally open switch NO includes a switch material with an electrical resistivity that is permanently decreased when heated to at least a first temperature, and each normally closed switch NC includes a switch material with an electrical resistivity that is permanently increased when heated to a second temperature. Generally the first and second temperatures will be different; however, this is not required, and the first and second temperatures can be equal. Each of the switches NO and NC are positioned and the switch materials are selected such that by about the time the neighboring portion of reactant has substantially reacted, the normally open and normally closed switch materials reach the first and second temperatures, respectively, resulting in the normally open switch NO closing and the normally closed switch NC opening. This allows current to flow through the next branch in the sequence, energizing the heating element therein, and stops the flow of current through the branch preceding it, deenergizing the heating element therein. This process is repeated for each set of branches B, heating elements H, normally open switches NO and normally closed switches NC, so that the heating elements H are energized and deenergized in the sequence, with the period of time during which adjacent heating elements in the sequence are both heating is minimal. Embodiments are described in greater detail below. When a normally open switch is in the open state, it will have a resistance that is preferably at least 20 times, more preferably at least 100 times and most preferably at least 100 times the resistance of the heating element in the preceding branch. When a normally closed switch is in the closed state, it will have a resistance that is preferably less than 0.2 times, more preferably less than 0.1 times and most preferably less than 0.01 times the resistance of the heating element in the preceding branch. In an embodiment an open switch has an electrical resistance greater than 2.0 kohm and a closed switch has an electrical resistance less than 0.5 ohm.

Therefore, the circuit includes a plurality of parallel branches in a sequence between leads in electrical communication with an energy source. The sequence includes at least a first branch and a next branch following the first branch. If there are only two branches, the next branch can also be referred to as the last branch. If there are more than two branches, there is a plurality of next branches in the sequence, with the final branch in the sequence being the last branch. Individual next branches can be referred to as the first next branch, the second next branch, and so on, to reflect their relative order following the first branch in the sequence. Preferably a normally closed switch will open prior to the normally open switch disposed between that branch and the next branch closes.

The hydrogen generator can include one or more fuel units that can be inserted into and removed from the hydrogen generator. Preferably the fuel units are user-replaceable, so a user can replace used fuel units with fuel units with fresh reactant, while the remainder of the hydrogen generator can be reused. As used herein, user-replaceable means the hydrogen generator is designed such that a user can easily insert and remove fuel units without tools or equipment, or with no more than simple hand tools such as a screw driver or a wrench.

The hydrogen generator can include a holder configured to contain one or more fuel units and can also contain at least some of the other components of the hydrogen generator. In some circumstances, it may be desirable to locate at least some portions of those other components outside the holder, such as elsewhere within the fuel cell system and/or device. The holder can include a housing of its own, particularly if the holder is intended to be removed from or used while outside the rest of the fuel cell system or device. A separate holder housing may not be desired if the hydrogen generator is contained within the fuel cell system and/or device. For example, a portion of the fuel cell system or device can serve as all or part of a holder housing. The holder housing has sufficient mechanical strength and resistance to the environment to which the hydrogen generator is expected to be exposed, particularly to high temperatures and reactants and byproducts associated with the hydrogen generating reactions. Metals such as aluminum, steel and stainless steel, ceramics, and high temperature resistant polymers such as polyphenylene sulfide, acrylonitrile butadiene styrene, polyetheretherketone, polyetherimide, polyoxybenzylmethylenglycol anhydride (Bakelite®), epoxies, phenolics, diallyl phthalate and melamine may be suitable for the housing. In some embodiments the holder may be made from a material that is a poor thermal conductor (e.g., less than 10 watts/meter•Kelvin), and preferably less than 1 watt/meter•Kelvin) to protect the rest of the fuel cell system, the device and/or the user from heat produced within the hydrogen generator. If desired, thermal insulation can be added to the hydrogen generator, within the housing, around the housing or elsewhere in the fuel cell system or the device. A vacuum, such as in a hollow space in a wall(s) of the holder, can provide thermal insulation. Thermal insulation can protect components of the hydrogen generator, other parts of the fuel cell system, the device with which the fuel cell system is being used, and/or the user.

The holder can include one or more cavities in which fuel units can be contained. In an embodiment, the fuel unit or units are removably inserted. The cavity can include features for aligning the fuel unit in a particular orientation, providing thermal and/or electrical contact with the fuel unit, and/or providing a hydrogen gas flow path between the holder and the fuel unit. For example, the cavity can include one or more projections that cooperate with features of the fuel unit to permit insertion of a fuel unit into the cavity in only the desired orientation, projections can provide electrical and/or thermal contact with the fuel unit, or one or more projections can extend into a recessed area of the fuel unit to provide heating from the inside of the fuel unit outward.

The holder can be closed or closable to retain the fuel unit within the cavity, and it may be sealable to exclude gases from the outside environment and to contain pressurized hydrogen gas. If internal pressure can build up during operation of the hydrogen generator, it may be desirable to include a pressure relief vent in the housing to release gas before the pressure gets too high *(i.e.,* to prevent undesired opening or bursting of the housing).

Hydrogen gas produced in the fuel unit flows to an outlet that interfaces with the rest of the fuel cell system. The hydrogen generator can also include various fittings, valves and electrical connections for providing hydrogen to and interfacing with the fuel cell battery and/or an electrical appliance being provided with power by the fuel cell system. It may be desirable to provide one or more filters or purification units (referred to as filters below) in the hydrogen flow path to remove solid or gaseous byproducts (such as fuel cell poisons) and/or unreacted reactant from the hydrogen. Filters can be located within the fuel units, within the holder and/or at the interface between the hydrogen generator and the rest of the fuel cell system. Filters within the fuel units are replaced when the fuel units are replaced. It may be desirable to provide access for periodically replacing filters located outside the fuel units. Examples of materials that may be suitable for filters include silica, silicon dioxide, silicon nitrides, silicon carbide, silica aerogel, alumina, aluminum oxide, glass, glass wool, mineral wool, cellular glass, perlite and polymers such as polyimides and epoxy-amine composites, as well as suitable gas purification units (such as ion exchange resins). It may be possible to position filters so they also provide thermal insulation.

The hydrogen generator also includes a plurality of electric heating elements as initiators for converting electric energy from an energy source to thermal energy that can provide heat for a hydrogen-generating thermal decomposition reaction in the fuel unit. The heating elements can be resistive heaters, which can include metals or alloys such nickel-chromium, iron-chromium-aluminum and copper-nickel. Examples of suitable energy sources include one or a combination of a primary battery, a secondary battery, a fuel cell battery, a capacitor and a public utility. The energy source can be outside the fuel unit, such as in the holder, elsewhere in the fuel cell system, in the device, or external to the device, or the energy source could be included within the fuel unit *(e.g.,* when the fuel unit is replaceable the energy source is a small, inexpensive battery). Circuitry in the holder can carry the electric energy to the initiator.

The heating elements can be disposed within the fuel unit. They can be in electrical communication with the energy source through electrical terminals in the holder that make electrical contact with corresponding electrical contacts in the fuel unit. The terminals in the holder can be biased against the fuel unit contacts. The electrical contacts can be located in electrically conductive portions of a fuel unit package, or the electrical contacts can project from the fuel unit.

The reactant composition contains at least one hydrogen containing reactant that will undergo a thermal decomposition reaction to produce hydrogen gas when heated to at least a minimum temperature. More than one reactant can be included. A thermal decomposition reaction is different from a reaction between or among reactants, such as a hydrolysis or alcoholysis reaction. Examples of such reactants include: lithium imide (Li₂NH), lithium amide (LiNH₂), an ammonium halide *(e.g.,* NH₄F, NH₄Cl or N₂H₆Cl₂) plus a chemical hydride *(e.g.,* LiH, LiBH₄, NaBH₄, LiAlH₄ or NaAlH₄), alane (AlH₃), ammonia borane (NH₃BH₃), ammonia borane plus a chemical hydride *(e.g.,* alane or a boron hydrazine complex such as hydrazine bisborane (N₂H₄(BH₃)₂)), ammonium nitrate (NH₄NO₃) plus diammonium decaborane (B₁₀H₁₀(NH₄)₂), and other materials, such as grapheme and carbon nanotubes with hydrogen inserted therein. Choices of reactants may be limited by other factors such as: physical and chemical properties of the reactant; the type of initiation system being used; the temperature range for the desired thermal decomposition reaction; whether the hydrogen-generating reaction is exothermic or endothermic; the composition, form and properties of reaction byproducts; and so on. Preferred reactants do not require costly catalysts to undergo the desired hydrogen-generating reactions.

The reactant composition can also contain one or more additives. Examples of additives include binders *(e.g.,* acrylates and styrene block copolymers), stabilizing compounds *(e.g.,* solid bases), thermally conductive materials *(e.g.,* metals, graphites and combinations and composites thereof), ignition materials as described below, thermally conductive coatings or layers, thermally insulating coatings or layers, and so on. Preferably catalysts are not included in the reactant composition.

It may be desirable to include an ignition material in the fuel unit. An ignition material reacts exothermically when heated and can be used in conjunction with the heating elements to provide heat to initiate the hydrogen-producing reaction of the reactant. An ignition material can provide a number of advantages. The minimum temperature to which the ignition material must be heated to react may be lower than the minimum reaction temperature of the reactant, reducing the heat producing requirement for the initiation system. Because the ignition material reacts exothermically, it can reduce the total amount of energy that must be supplied to the initiator during use of the fuel unit, particularly if the thermal decomposition reaction of the reactant is endothermic. An ignition material can be disposed within or in contact with a portion of the reactant composition. For example, the ignition material can be an ingredient of the reactant composition, the ignition material can be a separate layer of the reactant composition, or ignition material can be in a separate body in thermal communication with the reactant. When an ignition material is separate from the reactant, as a separate layer or as a separate pellet for example, portions containing ignition material can be alternated with portions containing reactant. For example, each portion containing reactant can have an adjacent portion of ignition material; a portion containing ignition material can be disposed adjacent to multiple portions containing reactant. Ignition material can be disposed proximate a heating element to facilitate initiation by a heating element. A portion of ignition material can extend away from the point at which heat is applied to facilitate heating reactant in remote portions of the pellet. (In some embodiments, both the portion containing reactant and the portion containing ignition material contain reactant and ignition materials, but in different proportions. In these embodiments, a portion containing a higher proportion of reactant is referred to as a portion containing reactant, and a portion containing a higher proportion of ignition material is referred to as a portion containing ignition material.) Some types of ignition materials will also produce hydrogen gas when they react, contributing to the total amount of hydrogen the fuel unit can provide. Examples of ignition materials include iron powder or TiH₂ plus KClO₄, MnO₂ plus LiAlH₄, Ni plus Al, Zr plus PbCrO₄ Fe_{z}O₃ plus Al (thermite), and LiAlH₄ plus NH₄Cl. It will be understood that references herein to initiating a reaction in a hydrogen-generating reactant includes initiating a heat-generating reaction in an ignition material in embodiments in which the fuel unit includes an ignition material.

The reactant composition in each fuel unit can be in a single mass or segregated into a plurality of individual quantities. Having multiple segregated quantities of reactant composition can facilitate control of the sequential heating of different portions of the reactant composition and efficiency of both heating and reactant utilization. The reactant composition is preferably a high density solid composition. The solid composition can be in any suitable form, such as powdered, granular or formed into solid bodies such as pellets, pills, tablets, wafers or cakes. The segregated quantities of reactant mixture can be sized and shaped to produce a desired amount of hydrogen gas, and they can be fit within the fuel unit in a volume efficient manner, facilitate initiation, prevent cross-initiation of adjacent quantities, facilitate release of generated hydrogen, and so on. Quantities of reactant mixture can be segregated from one another in various ways such as by containment in individual compartments and/or being spaced apart by gaps, coatings, thermal insulation and the like. For convenience, individual segregated quantities of reactant mixture can be referred to herein as pellets, regardless of the form the mixture is in or the size, shape or method of segregation.

Individual heating elements can be associated with pellets of reactant composition in various ways. For example, a heating element can be disposed to heat a single pellet or more than one pellet, and various combinations can be used. In one embodiment, each heating element is disposed to heat a single pellet. With internal heating elements, heating elements can be disposed on a surface of or within the reactant composition. Manufacturing may be simpler with the heating elements on the surface. Heating efficiency and reactant utilization may be better with the heating elements within the reactant composition.

Pellets can be arranged in various ways within the fuel unit, and they can be formed in various ways, such as by filling compartments with a powdered or granular mixture, forming solid bodies *(e.g.,* by compressing, molding, extruding, depositing, coating, roll coating, printing, and so on). The pellets can be either free-standing bodies, contained in a receptacle or compartment, or formed on a substrate. Pellets and substrates on which pellets are disposed can have a variety of shapes and configurations, including spiral wound, Z-fold and tubular configurations. If the pellets include powdered or granular material in compartments, the compartments may be covered with a covering layer to retain the material in the desired compartments. Receptacles and compartment containers and substrates on which the pellets are disposed can serve other purposes in the fuel unit *(e.g.,* fuel unit packaging; structural support to provide strength or gas flow paths; electrical or thermal conduction; electrical or thermal insulation; etc.).

The fuel unit can include a package to contain the reactant composition as well as at least non-gaseous reaction products. The package will have sufficient strength and chemical and thermal stability to do so during shipping, storage and handling prior to use, during use, and during removal and subsequent handling. Examples of materials that can be used for the package include metal foil, polymer film, laminates such as metal/plastic laminates, and cast or molded casings. Laminates and cast or molded casing can be advantageous when only portions of the package can or must be electrically or thermally conductive or nonconductive. For example, conductive areas can be created in a nonconductive casing by insert-molding metal members, and conductive areas can be created in a metal/plastic laminate by exposing a center metal layer through openings in outer plastic layers. Examples of metal/plastic laminates include metals such as aluminum, nickel, copper and steel and polymers such as polyesters, nylons, polypropylene and polyethylene. High temperature plastics and thermosets can be used to cast or mold casings; examples include polyimides such as KAPTON® (from DuPont) and polyether ether ketone (PEEK) polymers. The package can be closed by any suitable method or methods, such as by folding and/or overlapping, mechanically closing, sealing *(e.g.,* with an adhesive, heat seal, ultrasonics) and so on. The type of initiation system used may require that the package include other properties as well *(e.g.,* electrically or thermally conductive or insulating). It may also be desirable for the package to remain sealed except to release hydrogen as needed. This can require sealing the package, the use of a hydrogen outlet valve and/or the capability of containing at least some internal pressure for example. Sealing the package can protect the contents from exposure to the environment *(e.g.,* from oxygen and moisture), contain small quantities of hydrogen that may be produced before the fuel unit is used and facilitate removal of contaminants from the hydrogen gas before it is released from the fuel unit.

It may be desirable to include thermal insulation near or as part of the package to protect the user when a used fuel unit is removed from the hydrogen generator. The package itself may be or include *(e.g.,* as a layer thereof) a poor thermal conductor, or a layer of thermal insulation can be provided external or internal to the package. Examples of materials that may be suitable as thermal insulation include silica, silicon dioxide, silicon nitrides, silicon carbide, silica aerogel, alumina, aluminum oxide, glass, glass wool, mineral wool, cellular glass, perlite, and polymers such as polyimides and epoxy-amine composites. The hydrogen generator can include means for preventing removal of a hot fuel unit from the hydrogen generator. For example, temperature can be monitored with a sensor, and a latching mechanism can be maintained in a latched position to prevent opening a door to remove the fuel unit.

In order to provide hydrogen gas on an as-needed basis without developing a high internal pressure within the hydrogen generator a control system can be used in conjunction with the circuit containing the heating elements. The control system controls the supply of energy from a source to the circuit. The control system can determine the need for hydrogen and/or the required hydrogen flow rate by monitoring the pressure within the fuel cell system, one or more electrical characteristics of the fuel cell stack, or one or more electrical characteristics of the electronic device, for example. The controller may communicate with the device or the fuel cell stack to determine when more hydrogen is needed. The control system can be completely or partially disposed in the hydrogen generator, the fuel cell stack, the electronic device being powered by the fuel cell stack, or any combination thereof. The control system can include a microprocessor or microcontroller; digital, analog and/or hybrid circuitry; solid state and/or electromechanical switching devices; capacitors, sensing instrumentation, timers and so on. The same or a different control system can also be used for other purposes, such as identifying hydrogen generators and fuel units that are appropriate or approved for use, preventing use of inappropriate or unapproved hydrogen generators and fuel units, controlling charging of batteries in the fuel cell system and the device by the fuel cell battery, calculating and providing information on the remaining capacity of the fuel unit(s), recording historical information regarding the use of fuel units, the hydrogen generator, the fuel cell system and the device, preventing operation of the hydrogen generator under unsafe conditions, and other purposes.

In an embodiment of the normally open switch, the switch is a single pole switch, and the switch material is a component of the reaction composition. Each normally open switch has two contacts separated by a gap. Reactant composition is in the gap. Initially the reactant composition has a very low electrical conductivity so the normally open switch has a high electrical resistance in the open state compared to the preceding heating element, so that minimal current will flow through the switch when it is open. The reactant composition includes a material that becomes more electrically conductive when heated, so that when the reactant composition is heated, it permanently increases in electrically conductivity when its temperature reaches or exceeds a certain temperature (referred to herein as the first temperature). When sufficient reactant composition between the switch contacts is heated to at least the first temperature, current begins to flow through the switch *(i.e.,* the normally open switch closes). As more of the reactant composition between the contacts is heated, the electrical conductivity of the switch material between the switch contacts continues to increase to a maximum. In this way, the normally open switch closes without requiring any moving parts. The switch design is very simple, requiring only two electrical contacts on or within the reactant composition. The reactant composition can contain one or more ingredients that become electrically conductive in response to heating. A reactant and/or one or more additives in the reactant composition can be such an ingredient. An example of a reactant that becomes permanently electrically conductive in response to heating is alane. Alane (AlH₃) begins to react to produce hydrogen gas when heated to about 140 to 170 °C. A byproduct of this reaction is aluminum metal, which has a high electrical conductivity. The overall conductivity of the reactant composition after all of the alane is converted to aluminum will depend in part on the other ingredients in the reactant composition. Other compositions known to become electrically conductive when heated can be included as additives to the reactant mixture. For example, a variety of compositions have been used as switch materials in normally open switches in photoflash units. Examples of these compositions include: (1) a solid copper salt of an organic acid *(e.g.,* copper formate, acetate and oxalate) and a finely divided non-conductive metal reducing agent *(e.g.,* Ti, Hf, Zr, V, Ni and Ta) in an admixture with a humidity resistant organic polymer binder *(e.g.,* cellulose esters, cellulose ethers, acrylates, polycarbonates, polystyrene, and styrene-butadiene block copolymers) as disclosed in U.S. Patent No. 3,969,065; (2) a carbon-containing silver salt *(e.g.,* silver carbonate, pyruvate, acetylactonate, acetate, oxalate, citrate, behenate and benzoate) in a humidity resistant organic polymer *(e.g.,* cellulose esters, cellulose ethers, acrylates, polycarbonates, and polystyrene) as disclosed in U.S. Patent Nos. 3,951,582 and 3.990,833; a noble metal compound *(e.g.,* a silver oxide) in an organic binder *(e.g.,* a polyvinyl resin) as disclosed in U.S. Patent No. 3,458,270.

In another embodiment of the normally open switch, the switch is a single pole switch, and the switch material is a material that is not an ingredient of the reactant mixture, the switch material being disposed in or bridging the gap between the switch contacts. The switch material can be applied by any suitable process, such as printing, laminating (with pressure or an adhesive), or the like. The switch operates in a manner similar to the normally open switch with reactant mixture in the gap between the contacts described above. Examples of suitable switch materials other than the reactant composition include the examples disclosed above as reactant composition additives that can be used when the reactant composition is the switch material.

In an embodiment of the normally closed switch, the switch is a single pole switch, and the switch material that is not an ingredient of the reactant mixture. This switch is essentially a thermal fuse. The switch material can be a fusible electrically conductive material that connects the switch contacts in its normally closed condition but will melt at a specific temperature (the second temperature) to break the connection between the switch contacts. Examples of such fusible materials include thin segments of metals or metal alloys with a suitable melting point. For example, an alloy of 58 parts bismuth and 42 parts tin will melt at about 140°C. Alternatively, the switch material can be a material that is electrically conductive at room temperature but will permanently change to an electrically nonconductive material at the second temperature. Examples of such materials include an electrically conductive carbon ink containing at least 25 dry weight percent powdered carbon, an organic polymer binder and a particulate electrically conductive radiation absorbing material and other similar materials disclosed in U.S. Patent Nos. 4, 410,307, 4,133,631 and 4,154,569. The switch material can be selected based on the temperature at which it will melt or at which it becomes electrically nonconductive.

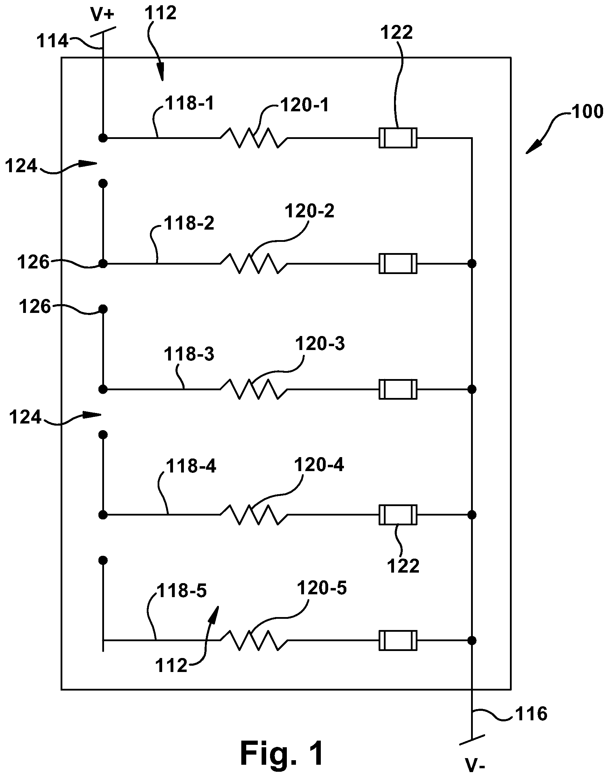

FIG. 1 is a schematic drawing of an embodiment of a fuel unit with an electric circuit as described above. The fuel unit 100 contains a reactant composition 112 including a reactant that produces hydrogen gas upon thermal decomposition. The electric circuit includes first and second leads 114, 116 in electrical contact with a power source, a plurality of parallel branches 118 disposed in a sequence (118-1, 118-2, 118-3, 118-4, 118-5) between the leads 114, 116, and a plurality of heating elements 120 (120-1, 120-2, 120-3, 120-4, 120-5), each contained in a branch 118 of the circuit. Each branch 118, except for the last branch 118-5, also includes a normally closed (NC) switch 122, such as a thermal fuse. Between adjacent branches 118 are normally open (NO) switches 124, each having a pair of contacts 126. When current initially flows through the circuit, it flows through a first branch 118-1, and the heating element 120-1 produces heat, the reactant composition 112 in a portion of the fuel unit 100 to produce hydrogen gas. As this occurs, the temperature in the first branch 118-1 increases until, when most of the reactant in that portion of the reactant composition 112 is reacted, the first NO switch 124 (between the first branch 118-2 and the next branch 118-2) is heated sufficiently to close and the first NC switch 122 is heated sufficiently to open. The first NO switch 124 closes when a switch material between the contacts 126 of that switch 124 reaches a first temperature, at which time its resistivity permanently decreases. When the first NO switch 124 closes, current begins to flow through the second branch 118-2, and the second heating element 120-2 contained therein begins to produce heat. The first NC switch 122 opens when a switch material therein reaches a second temperature, so current can no longer flow through the first branch 118-1. This process is repeated to provide current to each branch 118 in sequence (118-1, 118-2, 118-3, 118-4, then 118-5).

The fuel unit 100 in FIG. 1 and its electric circuit can be modified in various ways, as described above. For example, the circuit in FIG. 1 has five branches, each including a heating element 120, but the plurality of branches 118 can be fewer or more than five. The circuit can be disposed within the fuel unit 100 (e.g., embedded within or on a surface of the reactant composition 118), on a surface of the fuel unit 100 and in good thermal communication with the reactant composition 112, or outside the fuel unit 100 and disposed such that when the fuel unit 100 is inserted into the hydrogen generator, the circuit is in good thermal communication with the reactant composition 112. The switch material between the contacts 126 of the normally open switches 124 can be a material as described above that has a high initial resistivity that permanently decreases to a low resistivity when heated to or above the first temperature. This switch material can be a material that is applied across the contacts 126 (not shown), or it can be a component of the reactant composition 112 between the contacts 126. A normally closed switch could be added to the last branch 118 in the circuit, but this may not be necessary. The portions of the reactant composition 112 heated by each of the heating elements 120 can be completely or partially segregated from one another, *e.g.,* by a layer of thermal insulation so that essentially only the reactant composition 112 within each portion is heated by the corresponding heater to produce hydrogen gas.

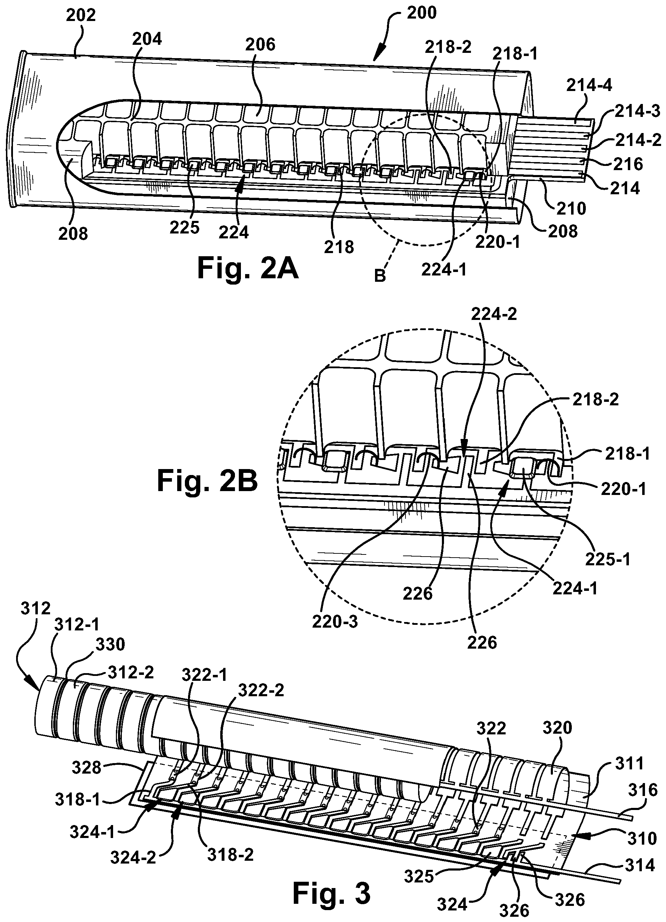

FIG. 2A is a partially cut away perspective drawing of another embodiment of a fuel unit for a hydrogen generator, employing a circuit similar to that shown in FIG. 1, and FIG. 2B is an enlargement of the portion of FIG. 2A indicated by circle B. In FIGs. 2A and 2B some components are not shown in order to show other details more clearly. Fuel unit 200 includes a holder 204 with a plurality of cavities 206, each containing a segregated quantity of reactant composition (not shown) in a housing 202 lined with thermal insulation 208. A circuit board 210 includes a circuit including a plurality of heating elements 220, each in direct contact with a segregated quantity of reactant composition. The circuit is in electrical contact with an energy source through first and second electric leads 214 and 216, and each heating element 220 is in a separate branch 218 of the circuit. Initially current can flow through only branch 218-1 and heating element 220-1, since normally open switches 224 prevent the flow of current through the other heating elements 220. For example, normally open switch 224-1 prevents current from flowing through branch 218-2. In this embodiment the reactant composition includes a reactant that reacts exothermally, so only sufficient heat must be applied to initiate the reaction. The heating elements 220 are made from a fusible material that melts at the second temperature, which is slightly higher than the minimum temperature required to initiate the reaction. Consequently, heating elements 220 also function as normally closed switches (thermal fuses) that open after initiating reaction of a segregated quantity of reactant composition, thereby stopping the flow of current through that heating element/normally closed switch 220. Once the first segregated quantity of reactant composition has been initiated by the first heating element 220-1, heating element 220-1 melts to stop the flow of current therethrough. Shortly before this, heat from the exothermic reaction in the first segregated quantity of reactant heats the switch material 225-1 (not shown) of normally open switch 224-1, permanently decreasing its resistivity to close switch 224-1 and allow current flow through circuit branch 218-2 and heating element 220-2 (not shown). (The switch material 225 of switches 224-1 and 224-2 in FIGs. 2A and 2B is not shown in order to show switch contacts 226.) This process is repeated in each of the branches 218 in sequence, as long as current is being provided by the energy source. After the process is halted by stopping the current flow through the circuit, the process can be started by again providing current from the energy source.

The embodiment in FIG. 2A can be modified in various ways as described above. For example, FIG. 2A shows a circuit including leads 214 and 216, as well as three other similar circuits, each including common lead 216 and one of leads 214-2, 214-3 and 214-4, with each circuit associated with a separate row of cavities 206 containing segregated quantities of reactant composition. However, fuel unit 200 could include a single circuit, or any other number of circuits, and the number of segregated quantities of reactant composition can be varied as desired. The fuel unit 200 could include another holder 204 with quantities of reactant mixture in cavities 206, on the opposite side of the circuit board 210 for example, with one or more corresponding circuits on the opposite side of the circuit board. The fuel unit 200 shown has a generally rectangular cross section, but it can have other shapes. The pattern of the circuit and the relative locations of the components can be varied, with each branch 218 including a heating element 220 separated from adjacent branches 218 with heating elements by a normally open switch 224, each heating element disposed so it can initiate reaction in a quantity of reactant composition, and each normally open switch 224 disposed so it can be heated by a reacting quantity of reactant composition to close the switch 224 to the next branch 218 and heating element 220.

Another embodiment of a fuel unit is shown in FIG. 3. The drawing is a partially exploded, partially cut away perspective view of fuel unit 300, shown with any desired housing, packaging, or thermal insulation removed to show the contents more clearly. The fuel unit 300 includes a rod of reactant composition 312 (shifted to the left in FIG. 3), wrapped with a flexible circuit board 310 (partially unrolled and cut away in FIG. 3). The reactant composition 312 is segregated into individual quantities (e.g., pellets) by layers of thermal insulation 330, with each quantity heated by a heating element 320. The reactant composition 312 in this embodiment reacts endothermically, requiring continued heating. In the fully assembled fuel unit 300, a layer of electrical insulation is disposed between a portion of the circuit and the adjacent reactant composition, as indicated by dashed line 328. The circuit board 310 includes an electrically nonconductive substrate 311 with an electric circuit disposed thereon. The circuit includes a plurality of branches 318, each including a heating element 320. Normally open switches 324 are disposed between adjacent branches 318, and a normally closed switch 322 is disposed in each of the branches 318. The switch material of the last two normally closed switches 322 is not shown in order to show the corresponding switch contacts. The normally open switches 324 include switch contacts 326, covered with a switch material 325 (in FIG. 3 the switch material 325 of the last normally open switch 324 on the right is not shown in order to show switch contacts 326). Current is provided to the circuit from an energy source through first and second leads 314 and 316 and can initially flow through only the first branch 318-1. As current flows through the heating element 320-1 (not shown) in the first branch 318-1, the adjacent pellet 312-1 is heated and reacts. As the reactant composition 312 on the side of the pellet 312-1 opposite the heating element 320-1 is heated, the temperature of the switch material 325 of the adjacent first normally open switch 324-1 rises. When the switch material 325 reaches the first temperature, the resistivity of the switch material 325 permanently decreases to close the switch 324-1, allowing current to flow to the second branch 318-2 of the circuit. As the first pellet 312-1 is substantially reacted, the temperature in the first branch 318-1 rises to the second temperature, at which the first normally closed switch 322-1 permanently opens to halt continued current flow through the first branch 318-1. With current flowing through the second branch 318-2, the second heating element 320-2 (not shown) heats the adjacent second pellet 312-2. This process is repeated in each of the branches 318 in sequence. Heating can be stopped when hydrogen is not needed by not providing current from the energy source, and heating can be resumed by restoring the flow of current to the circuit.

The embodiment in FIG. 3 can be modified in various ways as described above. For example, normally closed switch 322 in the last branch 318 of the circuit can be omitted. The fuel unit 300 does not have to be cylindrical. It may not be necessary to segregate the reactant composition 312 into individual pellets. The pattern of the circuit and the relative locations of the components can be varied, with each branch 318 including a heating element 320 separated from adjacent branches 318 with heating elements by a normally open switch 324, each heating element disposed so it can initiate reaction in a quantity of reactant composition, and each normally open switch 324 disposed so it can be heated by a reacting portion of reactant composition 312 to close the switch 324 to the next branch 318 and heating element 320.

## Claims

1. A hydrogen generator comprising:
a reactant composition comprising a reactant that thermally decomposes to produce hydrogen gas when heated to at least a minimum temperature; and
an electric circuit in electrical communication with an energy source, the electric circuit comprising:
a plurality of parallel branches in a sequence, the sequence comprising in order a first branch and at least one next branch, the final at least one next branch being a last branch;
a heating element in each of the parallel branches;
a normally open switch between each pair of parallel branches in the sequence, the normally open switch having an open state and a closed state; and
a normally closed switch in each parallel branch except the last branch, the normally open switch having a closed state and an open state;
wherein the hydrogen generator is configured such that:
current flowing through the circuit initially flows through only the first branch;
the heating element in the first branch is disposed to heat a first portion of the reactant composition, a first normally open switch and a first normally closed switch;
when the first normally open switch is in the closed state, a current flow through the circuit does not include a current flow through the adjacent next branch, in which a next heating element is disposed to heat a next portion of the reactant composition;
when the first normally closed switch is in the open state, a current flow through the circuit does not include a current flow through the first branch;
each of the normally open switches comprises a switch material with a resistivity that permanently decreases in response to heating to at least a first temperature such that the normally open switch is in the closed state upon heating to at least the first temperature; and
each of the normally closed switches is in the open state upon heating to at least a second temperature.

2. The hydrogen generator according to claim 1, wherein:
the sequence of parallel branches comprises the first branch, followed by a first next branch, followed by a second next branch;
a next normally open switch is disposed between the first next branch and the second next branch;
a next normally closed switch is disposed in the first next branch;
the heating element in the first next branch is disposed to heat the next normally open switch, the next normally closed switch and a first next portion of the reactant composition;
the heating element in the second next branch is disposed to heat a second next portion of the reactant composition;
when the next normally open switch is in the closed state, a current flow through the circuit does not include a current flow through the second next branch; and
when the next normally closed switch is in the open state, a current flow through the circuit does not include a current flow through the first next branch.

3. The hydrogen generator according to claim 2, wherein the second next branch is the last branch.

4. The hydrogen generator according to any one of the preceding claims, wherein the heating element in each branch except the last branch is disposed to heat the normally closed switch in that branch and the normally open switch between that branch and the next branch in the sequence, such that the heating elements can be energized and deenergized in the sequence, beginning with the heating element in the first branch and ending with the heating element in the last branch.

5. The hydrogen generator according to any one of the preceding claims, wherein the reactant composition is segregated into individual fuel pellets, each of which is in thermal communication with a heating element.

6. The hydrogen generator according to any one of the preceding claims, wherein the reactant composition comprises a material that can increase in electrical conductivity when heated, and a portion of the reactant composition is the switch material in the normally open switches.

7. The hydrogen generator according to any one of the preceding claims, wherein the normally open switches include no moving parts but include an initially electrically nonconductive switch material that can become permanently electrically conductive upon heating to at least the first temperature.

8. The hydrogen generator according to any one of the preceding claims, wherein the normally closed switches have no moving parts but include an initially electrically conductive material that will become permanently electrically nonconductive upon heating to at least the second temperature.

9. The hydrogen generator according to any one of the preceding claims, wherein the first temperature and the second temperature are different.

10. The hydrogen generator according to any one of claims 1 to 8, wherein the first temperature and the second temperature are equal.

11. The hydrogen generator according to any one of the preceding claims, wherein the heating element in each of the parallel branches has a heating element resistance, and each normally open switch:
is disposed between a preceding branch and a following branch in the sequence;
when in an open state has a resistance of at least 20 times the resistance of the heating element in the preceding branch; and
when in a closed state has a resistance less than 0.2 times the resistance of the heating element in the preceding branch.

12. The hydrogen generator according to any one of the preceding claims, wherein the normally closed switch in each branch is in the open state before the normally open switch between that branch and the next branch is in the closed state.

13. The hydrogen generator according to any one of the preceding claims, wherein the reactant is contained in a user-replaceable fuel unit disposed in the hydrogen generator.

14. The hydrogen generator according to claim 13, wherein the plurality of electric heating elements and the electric circuit are disposed in the fuel unit.

15. A method of generating hydrogen gas with a hydrogen generator comprising a reactant composition comprising a reactant that thermally decomposes to produce hydrogen gas when heated to at least a minimum temperature; and an electric circuit in electrical communication with an energy source, the electric circuit comprising: a plurality of parallel branches in a sequence, the sequence comprising in order a first branch and at least one next branch, the final at least one next branch being a last branch; a heating element in each of the parallel branches; a normally open switch between each pair of parallel branches in the sequence, the normally open switch having an open state and a closed state; and a normally closed switch in each parallel branch except the last branch, the normally open switch having a closed state and an open state; the method comprising the steps:
(a) passing an electric current through the circuit, including only the first branch to energize a first heating element therein;
(b) heating a first portion of the reactant composition to at least the minimum temperature to release hydrogen gas therefrom;
(c) heating the first normally open switch and the first normally closed switch with the first heating element to open the first normally closed switch and close the first normally open switch after a majority of the reactant in the first portion has reacted to release hydrogen gas;
(d) continuing to pass an electric current through the circuit, including a first of the at least one next branches to energize a second heating element therein; and
(e) heating a second portion of the reactant composition to at least the minimum temperature to release hydrogen gas therefrom.

16. The method according to claim 15, wherein the hydrogen generator comprises more than one next branch, the second heating element further heats a second normally open switch and a second normally closed switch to open the second normally closed switch and close the second normally open switch, and an electric current continues to pass through the circuit, including a second next branch to energize a third heating element therein.

17. The method according to claim 15 or claim 16, wherein the hydrogen generator comprises more than one next branch, the heating element in each next branch heats a corresponding portion of the reactant composition to release hydrogen gas, the heating
element in each next branch except the last branch heats a corresponding normally closed switch and a normally open switch to open the corresponding normally closed switch and close the corresponding normally open switch after a majority of the reactant in the corresponding portion has reacted to release hydrogen gas.

## Patentansprüche

1. Wasserstoffgenerator, Folgendes umfassend:
eine Reagenszusammensetzung, umfassend ein Reagens, das sich thermisch zersetzt, um Wasserstoffgas zu erzeugen, wenn es mindestens auf eine Mindesttemperatur erwärmt wird; und
einen elektrischen Stromkreis in elektrischer Kommunikation mit einer Energiequelle, wobei der elektrische Stromkreis Folgendes umfasst:
mehrere parallele Pfade in einer Sequenz, wobei die Sequenz der Reihenfolge nach einen ersten Pfad und mindestens einen nächsten Pfad umfasst, wobei der abschließende mindestens eine nächste Pfad ein letzter Pfad ist;
ein Heizelement in jedem der parallelen Pfade;
einen normalerweise offenen Schalter zwischen jedem Paar paralleler Pfade in der Sequenz, wobei der normalerweise offene Schalter einen offenen Zustand und einen geschlossenen Zustand aufweist; und
einen normalerweise geschlossenen Schalter in jedem parallelen Pfad außer dem letzten Pfad, wobei der normalerweise offene Schalter einen geschlossenen Zustand und einen offenen Zustand aufweist;
wobei der Wasserstoffgenerator derart ausgelegt ist, dass:
durch den Stromkreis fließender Strom zunächst durch nur den ersten Pfad fließt;
das Heizelement in dem ersten Pfad angeordnet ist, einen ersten Teil der Reagenszusammensetzung, einen ersten normalerweise offenen Schalter und einen ersten normalerweise geschlossenen Schalter zu erwärmen;
wenn sich der erste normalerweise offene Schalter in dem geschlossenen Zustand befindet, ein Stromfluss durch den Stromkreis keinen Stromfluss durch den angrenzenden nächsten Pfad beinhaltet, in dem ein nächstes Heizelement angeordnet ist, um einen nächsten Teil der Reagenszusammensetzung zu erwärmen;
wenn sich der erste normalerweise geschlossene Schalter in dem offenen Zustand befindet, ein Stromfluss durch den Stromkreis keinen Stromfluss durch den ersten Pfad beinhaltet;
jeder der normalerweise offenen Schalter ein Schaltermaterial mit einem Widerstand umfasst, der in Reaktion auf das Erwärmen auf mindestens eine erste Temperatur dauerhaft absinkt, derart, dass sich der normalerweise offene Schalter bei Erwärmen auf mindestens die erste Temperatur in dem geschlossenen Zustand befindet; und
sich jeder der normalerweise geschlossenen Schalter bei Erwärmen auf mindestens eine zweite Temperatur in dem offenen Zustand befindet.

2. Wasserstoffgenerator nach Anspruch 1, wobei:
die Sequenz paralleler Pfade den ersten Pfad, gefolgt von einem ersten nächsten Pfad, gefolgt von einem zweiten nächsten Pfad, umfasst;
ein nächster normalerweise offener Schalter zwischen dem ersten nächsten Pfad und dem zweiten nächsten Pfad angeordnet ist;
ein nächster normalerweise geschlossener Schalter in dem ersten nächsten Pfad angeordnet ist;
das Heizelement in dem ersten nächsten Pfad angeordnet ist, den nächsten normalerweise offenen Schalter, den nächsten normalerweise geschlossenen Schalter und einen ersten nächsten Teil der Reagenszusammensetzung zu erwärmen;
das Heizelement in dem zweiten nächsten Pfad angeordnet ist, einen zweiten nächsten Teil der Reagenszusammensetzung zu erwärmen;
wenn sich der nächste normalerweise offene Schalter in dem geschlossenen Zustand befindet, ein Stromfluss durch den Stromkreis keinen Stromfluss durch den zweiten nächsten Pfad beinhaltet; und
wenn sich der nächste normalerweise geschlossene Schalter in dem offenen Zustand befindet, ein Stromfluss durch den Stromkreis keinen Stromfluss durch den ersten nächsten Pfad beinhaltet.

3. Wasserstoffgenerator nach Anspruch 2, wobei der zweite nächste Pfad der letzte Pfad ist.

4. Wasserstoffgenerator nach einem der vorhergehenden Ansprüche, wobei das Heizelement in jedem Pfad außer dem letzten Pfad angeordnet ist, den normalerweise geschlossenen Schalter in diesem Pfad und den normalerweise offenen Schalter zwischen diesem Pfad und dem nächsten Pfad in der Sequenz zu erwärmen, derart, dass die Heizelemente in der Sequenz ein- und ausgeschaltet werden können, beginnend mit dem Heizelement in dem ersten Pfad und abschließend mit dem Heizelement in dem letzten Pfad.

5. Wasserstoffgenerator nach einem der vorhergehenden Ansprüche, wobei die Reagenszusammensetzung in einzelne Brennstoffpellets getrennt ist, von denen jedes in thermischem Austausch mit einem Heizelement steht.

6. Wasserstoffgenerator nach einem der vorhergehenden Ansprüche, wobei die Reagenszusammensetzung ein Material umfasst, das bei Erwärmen seine elektrische Leitfähigkeit erhöhen kann, und ein Teil der Reagenszusammensetzung das Schaltermaterial in den normalerweise offenen Schaltern ist.

7. Wasserstoffgenerator nach einem der vorhergehenden Ansprüche, wobei die normalerweise offenen Schalter keine beweglichen Teile beinhalten, sondern ein zunächst elektrisch nichtleitendes Schaltermaterial beinhalten, das bei Erwärmen auf mindestens die erste Temperatur dauerhaft elektrisch leitend werden kann.

8. Wasserstoffgenerator nach einem der vorhergehenden Ansprüche, wobei die normalerweise geschlossenen Schalter keine beweglichen Teile aufweisen, sondern ein zunächst elektrisch leitfähiges Material beinhalten, das bei Erwärmen auf mindestens die zweite Temperatur dauerhaft elektrisch nichtleitend wird.

9. Wasserstoffgenerator nach einem der vorhergehenden Ansprüche, wobei die erste Temperatur und die zweite Temperatur verschieden sind.

10. Wasserstoffgenerator nach einem der Ansprüche 1 bis 8, wobei die erste Temperatur und die zweite Temperatur gleich sind.

11. Wasserstoffgenerator nach einem der vorhergehenden Ansprüche, wobei das Heizelement in jedem der parallelen Pfade einen Heizelementwiderstand aufweist, und jeder normalerweise offene Schalter:
zwischen einem vorhergehenden Pfad und einem nachfolgenden Pfad in der Sequenz angeordnet ist;
in einem offenen Zustand einen Widerstand von mindestens dem 20-fachen des Widerstands des Heizelements in dem vorhergehenden Pfad aufweist; und
in einem geschlossenen Zustand einen Widerstand von weniger als dem 0,2-fachen des Widerstands des Heizelements in dem vorhergehenden Pfad aufweist.

12. Wasserstoffgenerator nach einem der vorhergehenden Ansprüche, wobei sich der normalerweise geschlossene Schalter in jedem Pfad in dem offenen Zustand befindet, bevor sich der normalerweise offene Schalter zwischen diesem Pfad und dem nächsten Pfad in dem geschlossenen Zustand befindet.

13. Wasserstoffgenerator nach einem der vorhergehenden Ansprüche, wobei das Reagens in einer in dem Wasserstoffgenerator angeordneten durch den Anwender erneuerbaren Brennstoffeinheit befindet.

14. Wasserstoffgenerator nach Anspruch 13, wobei die mehreren elektrischen Heizelemente und der elektrische Stromkreis in der Treibstoffeinheit angeordnet sind.

15. Verfahren zum Erzeugen von Wasserstoffgas mit einem Wasserstoffgenerator, umfassend eine Reagenszusammensetzung, die ein Reagens umfasst, das sich thermisch zersetzt, um bei Erhitzen auf mindestens eine Mindesttemperatur Wasserstoffgas zu erzeugen; und einen elektrischen Stromkreis in elektrischer Kommunikation mit einer Energiequelle, wobei der elektrische Stromkreis Folgendes umfasst: mehrere parallele Pfade in einer Sequenz, wobei die Sequenz der Reihenfolge nach einen ersten Pfad und mindestens einen nächsten Pfad umfasst, wobei der abschließende mindestens eine nächste Pfad ein letzter Pfad ist; ein Heizelement in jedem der parallelen Pfade; einen normalerweise offenen Schalter zwischen jedem Paar paralleler Pfade in der Sequenz, wobei der normalerweise offene Schalter einen offenen Zustand und einen geschlossenen Zustand aufweist; und einen normalerweise geschlossenen Schalter in jedem parallelen Pfad außer dem letzten Pfad, wobei der normalerweise offene Schalter einen geschlossenen Zustand und einen offenen Zustand aufweist; wobei das Verfahren die folgenden Schritte umfasst:
(a) Leiten eines elektrischen Stroms durch den Stromkreis, einschließlich nur des ersten Pfades, um darin ein erstes Heizelement einzuschalten;
(b) Erwärmen eines ersten Teils der Reagenszusammensetzung auf mindestens die Mindesttemperatur, um daraus Wasserstoffgas freizusetzen;
(c) Erwärmen des ersten normalerweise offenen Schalters und des ersten normalerweise geschlossenen Schalters mit dem ersten Heizelement, um den ersten normalerweise geschlossenen Schalter zu öffnen und den ersten normalerweise offenen Schalter zu schließen nachdem ein Großteil des Reagens in dem ersten Teil reagiert hat, um Wasserstoffgas freizusetzen;
(d) Fortfahren, einen elektrischen Strom durch den Stromkreis zu leiten, einschließlich eines ersten des mindestens einen nächsten Pfads, um ein zweites Heizelement darin einzuschalten; und
(e) Erwärmen eines zweiten Teils der Reagenszusammensetzung auf mindestens die Mindesttemperatur, um daraus Wasserstoffgas freizusetzen.

16. Verfahren nach Anspruch 15, wobei der Wasserstoffgenerator mehr als einen nächsten Pfad umfasst, das zweite Heizelement ferner einen zweiten normalerweise offenen Schalter und einen zweiten normalerweise geschlossenen Schalter erwärmt, um den zweiten normalerweise geschlossenen Schalter zu öffnen und den zweiten normalerweise offenen Schalter zu schließen, und ein elektrischer Strom fortfährt, durch den Stromkreis zu laufen, beinhaltend einen zweiten nächsten Pfad, um ein drittes Heizelement darin einzuschalten.

17. Verfahren nach Anspruch 15 oder Anspruch 16, wobei der Wasserstoffgenerator mehr als einen nächsten Pfad umfasst, das Heizelement in jedem nächsten Pfad einen entsprechenden Teil der Reagenszusammensetzung erwärmt, um Wasserstoffgas freizusetzen, das Heizelement in jedem nächsten Pfad außer dem letzten Pfad einen normalerweise geschlossenen Schalter und einen normalerweise offenen Schalter erwärmt, um den entsprechenden normalerweise geschlossenen Schalter zu öffnen und den entsprechenden normalerweise offenen Schalter zu schließen, nachdem ein Großteil des Reagens in dem entsprechenden Teil reagiert hat, um Wasserstoffgas freizusetzen.

## Revendications

1. Générateur d'hydrogène comprenant :
une composition de réactif comprenant un réactif qui se décompose thermiquement pour produire de l'hydrogène gazeux lorsqu'il est chauffé à au moins une température minimale ; et
un circuit électrique en communication électrique avec une source d'énergie, le circuit électrique comprenant :
une pluralité de branches parallèles dans une séquence, la séquence comprenant dans l'ordre une première branche et au moins une branche suivante, la au moins une branche suivante finale étant une dernière branche ;
un élément chauffant dans chacune des branches parallèles ;
un commutateur normalement ouvert entre chaque paire de branches parallèles dans la séquence, le commutateur normalement ouvert ayant un état ouvert et un état fermé ; et
un commutateur normalement fermé dans chaque branche parallèle à l'exception de la dernière branche, le commutateur normalement ouvert ayant un état fermé et un état ouvert ;
dans lequel le générateur d'hydrogène est configuré de telle sorte que :
un courant circulant à travers le circuit circule initialement à travers uniquement la première branche ;
l'élément chauffant dans la première branche est disposé pour chauffer une première portion de la composition de réactif, un premier commutateur normalement ouvert et un premier commutateur normalement fermé ;
lorsque le premier commutateur normalement ouvert est dans l'état fermé, une circulation de courant à travers le circuit n'inclut pas une circulation de courant à travers la branche suivante adjacente, dans laquelle un élément chauffant suivant est disposé pour chauffer une portion suivante de la composition de réactif ;
lorsque le premier commutateur normalement fermé est dans l'état ouvert, une circulation de courant à travers le circuit n'inclut pas une circulation de courant à travers la première branche ;
chacun des commutateurs normalement ouverts comprend un matériau de commutateur ayant une résistivité qui décroît en permanence en réponse au chauffage à au moins une première température de telle sorte que le commutateur normalement ouvert soit dans l'état fermé lors du chauffage à au moins la première température ; et
chacun des commutateurs normalement fermés est dans l'état ouvert lors du chauffage à au moins une seconde température.

2. Générateur d'hydrogène selon la revendication 1, dans lequel :
la séquence de branches parallèles comprend la première branche, suivie par une première branche suivante, suivie par une seconde branche suivante ;
un commutateur normalement ouvert suivant est disposé entre la première branche suivante et la seconde branche suivante ;
un commutateur normalement fermé suivant est disposé dans la première branche suivante ;
l'élément chauffant dans la première branche suivante est disposé pour chauffer le commutateur normalement ouvert suivant, le commutateur normalement fermé suivant et une première portion suivante de la composition de réactif ;
l'élément chauffant de la seconde branche suivante est disposé pour chauffer une seconde portion suivante de la composition de réactif ;
lorsque le commutateur normalement ouvert suivant est dans l'état fermé, une circulation de courant à travers le circuit n'inclut pas une circulation de courant à travers la seconde branche suivante ; et
lorsque le commutateur normalement fermé suivant est dans l'état ouvert, une circulation de courant à travers le circuit n'inclut pas une circulation de courant à travers la première branche suivante.

3. Générateur d'hydrogène selon la revendication 2, dans lequel la seconde branche suivante est la dernière branche.

4. Générateur d'hydrogène selon l'une quelconque des revendications précédentes, dans lequel l'élément chauffant dans chaque branche à l'exception de la dernière branche est disposé pour chauffer le commutateur normalement fermé dans cette branche et le commutateur normalement ouvert entre cette branche et la branche suivante dans la séquence, de telle sorte que les éléments chauffants puissent être alimentés en énergie et désalimentés en énergie dans la séquence, en commençant avec l'élément chauffant dans la première branche et en terminant avec l'élément chauffant dans la dernière branche.

5. Générateur d'hydrogène selon l'une quelconque des revendications précédentes, dans lequel la composition de réactif est divisée en pastilles de combustible individuelles, dont chacune est en communication thermique avec un élément chauffant.

6. Générateur d'hydrogène selon l'une quelconque des revendications précédentes, dans lequel la composition de réactif comprend un matériau qui peut augmenter en conductivité électrique lorsqu'il est chauffé, et une portion de la composition de réactif est le matériau de commutateur dans les commutateurs normalement ouverts.

7. Générateur d'hydrogène selon l'une quelconque des revendications précédentes, dans lequel les commutateurs normalement ouverts n'incluent aucune partie mobile mais incluent un matériau de commutateur initialement électriquement non conducteur qui peut devenir électriquement conducteur en permanence lors du chauffage à au moins la première température.

8. Générateur d'hydrogène selon l'une quelconque des revendications précédentes, dans lequel les commutateurs normalement fermés n'ont aucune partie mobile mais incluent un matériau initialement électriquement conducteur qui deviendra électriquement non conducteur en permanence lors du chauffage à au moins la seconde température.

9. Générateur d'hydrogène selon l'une quelconque des revendications précédentes, dans lequel la première température et la seconde température sont différentes.

10. Générateur d'hydrogène selon l'une quelconque des revendications 1 à 8, dans lequel la première température et la seconde température sont égales.

11. Générateur d'hydrogène selon l'une quelconque des revendications précédentes, dans lequel l'élément chauffant dans chacune des branches parallèles a une résistance d'élément chauffant, et chaque commutateur normalement ouvert :
est disposé entre une branche précédente et une branche consécutive dans la séquence ;
lorsqu'il est dans un état ouvert, a une résistance d'au moins 20 fois la résistance de l'élément chauffant dans la branche précédente ; et
lorsqu'il est dans un état fermé, a une résistance inférieure à 0,2 fois la résistance de l'élément chauffant dans la branche précédente.

12. Générateur d'hydrogène selon l'une quelconque des revendications précédentes, dans lequel le commutateur normalement fermé dans chaque branche est dans l'état ouvert avant que le commutateur normalement ouvert entre cette branche et la branche suivante soit dans l'état fermé.

13. Générateur d'hydrogène selon l'une quelconque des revendications précédentes, dans lequel le réactif est contenu dans une unité de combustible remplaçable par l'utilisateur dans le générateur d'hydrogène.

14. Générateur d'hydrogène selon la revendication 13, dans lequel la pluralité d'éléments chauffants électriques et le circuit électrique sont disposés dans l'unité de combustible.

15. Procédé de génération d'hydrogène gazeux avec un générateur d'hydrogène comprenant une composition de réactif comprenant un réactif qui se décompose thermiquement pour produire de l'hydrogène gazeux lorsqu'il est chauffé à au moins une température minimale ; et un circuit électrique en communication électrique avec une source d'énergie, le circuit électrique comprenant : une pluralité de branches parallèles dans une séquence, la séquence comprenant dans l'ordre une première branche et au moins une branche suivante, la au moins une branche suivante finale étant une dernière branche ; un élément chauffant dans chacune des branches parallèles ; un commutateur normalement ouvert entre chaque paire de branches parallèles dans la séquence, le commutateur normalement ouvert ayant un état ouvert et un état fermé ; et un commutateur normalement fermé dans chaque branche parallèle à l'exception de la dernière branche, le commutateur normalement ouvert ayant un état fermé et un état ouvert ; le procédé comprenant les étapes de :
(a) passage d'un courant électrique à travers le circuit, incluant uniquement la première branche pour y alimenter en énergie un premier élément chauffant ;
(b) chauffage d'une première portion de la composition de réactif à au moins la température minimale pour en libérer de l'hydrogène gazeux ;
(c) chauffage du premier commutateur normalement ouvert et du premier commutateur normalement fermé avec le premier élément chauffant pour ouvrir le premier commutateur normalement fermé et fermer le premier commutateur normalement ouvert après qu'une majeure partie du réactif dans la première portion a réagi pour libérer de l'hydrogène gazeux ;
(d) poursuite du passage d'un courant électrique à travers le circuit, incluant une première de l'au moins une branche suivante pour y alimenter en énergie un deuxième élément chauffant ; et
(e) chauffage d'une seconde portion de la composition de réactif à au moins la température minimale pour en libérer de l'hydrogène gazeux.

16. Procédé selon la revendication 15, dans lequel le générateur d'hydrogène comprend plus d'une branche suivante, le deuxième élément chauffant chauffe en outre un second commutateur normalement ouvert et un second commutateur normalement fermé pour ouvrir le second commutateur normalement fermé et fermer le second commutateur normalement ouvert, et un courant électrique continue à passer à travers le circuit, incluant une seconde branche suivante pour y alimenter en énergie un troisième élément chauffant.

17. Procédé selon la revendication 15 ou la revendication 16, dans lequel le générateur d'hydrogène comprend plus d'une branche suivante, l'élément chauffant dans chaque branche suivante chauffe une portion correspondante de la composition de réactif pour libérer de l'hydrogène gazeux, l'élément chauffant dans chaque branche suivante à l'exception de la dernière branche chauffe un commutateur normalement fermé correspondant et un commutateur normalement ouvert pour ouvrir le commutateur normalement fermé correspondant et fermer le commutateur normalement ouvert correspondant après qu'une majeure partie du réactif dans la portion correspondante a réagi pour libérer de l'hydrogène gazeux.
